(19) Europäisches Patentamt
European Patent Office
Office européen des brevets

(11) **EP 3 975 056 A1**

(12) **EUROPEAN PATENT APPLICATION**

(43) Date of publication:
**30.03.2022   Bulletin 2022/13**

(51) International Patent Classification (IPC):
**G06N 3/04** (2006.01)    **G06N 3/063** (2006.01)
**G06N 3/08** (2006.01)

(21) Application number: **21177937.6**

(52) Cooperative Patent Classification (CPC):
**G06N 3/063; G06N 3/0454; G06N 3/08**

(22) Date of filing: **07.06.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.09.2020   US 202017030051**

(71) Applicant: **Facebook, Inc.**
**Menlo Park, CA 94025 (US)**

(72) Inventor: **Khaitan, Harshit**
**Menlo Park (US)**

(74) Representative: **Murgitroyd & Company**
**Murgitroyd House**
**165-169 Scotland Street**
**Glasgow G5 8PL (GB)**

(54) **NEURAL NETWORK WEIGHT DISTRIBUTION USING A TREE DIRECT-MEMORY ACCESS (DMA) BUS**

(57)   In one embodiment, a method for distributing neural network weights using a tree direct-memory access (DMA) bus includes receiving, by a tree DMA controller, a memory address indicating a location in memory storing a set of weights associated with a machine learning model. The tree DMA controller may also receive a distribution instruction indicating tensor processor clusters selected to receive the set of weights for processing. The tree DMA controller may retrieve the set of weights from the location in memory indicated by the memory address and then send the set of weights in a DMA packet addressed to the tensor processor clusters according to the distribution instruction. The DMA packet may be sent to the tensor processor clusters via the tree DMA bus and the tensor processor clusters may process different partitioned portions of an input feature in parallel using the neural network weights.

*FIG. 4*

**Description**

## TECHNICAL FIELD

This disclosure generally relates to accelerators for machine learning models and, more particularly, to neural network weight distribution using a tree direct-memory access (DMA) bus.

## BACKGROUND

Neural networks are increasingly being used to implement machine learning (ML) techniques to solve a wide variety of problems including, but not limited to, object identification, feature classification, or content-driven image processing. Some neural networks, which may be referred to as convolutional neural networks, include one or more convolutional layers. In a convolutional neural network (CNN), the convolutional layers typically account for the vast majority of the computations performed and the data movement within the CNN and/or between the CNN and other elements of an ML model, making them a performance bottleneck. Therefore, existing ML accelerators focus on using high compute parallelism along with an optimized data orchestration throughout the memory hierarchy to speed up the processing of convolutional layers. However, existing ML accelerators may not perform well when implemented within edge devices that have strict power consumption constraints and that run inference exercises using previously trained models in real time. For example, existing ML accelerators may not perform well within artificial reality systems for virtual reality (VR), augmented reality (AR), mixed reality (MR), or hybrid reality implemented on standalone head-mounted displays (e.g., on AR/VR headsets), mobile devices or other edge computing devices.

## SUMMARY OF PARTICULAR EMBODIMENTS

Accordingly, the present invention is directed to methods, computer-readable non-transitory storage media and systems according to the appended claims. In particular embodiments, a tree direct-memory access (DMA) controller and DMA bus structure may be used to selectively broadcast, multicast, or unicast neural network weights across multiple tensor processor units distributed throughout a machine learning (ML) accelerator. Specifically, the tree DMA controller may serve as a centralized hub through which neural network weights are distributed to tensor processor units throughout the ML accelerator. Individual tensor processor units are grouped into several clusters, or "tensor processor clusters." Each tensor processor cluster includes its own local memory (e.g., used to store weights) and several tensor processor units individually capable of performing neural network operators. The tree DMA controller may receive one or more addresses from a compiler indicating locations in memory (e.g., SRAM) where weights are stored. The tree DMA controller may also receive distribution instructions from the compiler regarding how the weights are to be distributed across tensor processor clusters for processing input (e.g., input features). The tree DMA controller may access the one or more addresses to retrieve the weights and then distribute the weights across tensor processor clusters via the DMA bus structure, or "tree DMA bus," according to the distribution instructions provided by the compiler.

Weights may be broadcast to all tensor processor clusters, multicast to a subset of tensor processor clusters, or unicast to a singular tensor processor cluster. For example, the tree DMA controller may access a memory address provided by the compiler to retrieve a set of weights and then broadcast the set of weights via the tree DMA bus to each tensor processor cluster for processing input features. In this instance, each tensor processor cluster may process the input features in synchronized lockstep such that when the tensor processor clusters have completed processing, they may each provide a token to the tree DMA controller indicating that the input features have been processed. In response to receiving the tokens, the tree DMA controller may retrieve additional weights from memory and distribute the additional weights to the tensor processor clusters via the tree DMA bus. By structuring the tree DMA bus according to a tree network topology (e.g., rather than a star or ring topology), the tree DMA controller may distribute neural network weights to each tensor processor cluster directly, thereby minimizing latency and overall power consumption. As such, the machine learning accelerator may be suitable for AR/VR applications or other applications that require feature processing with minimal latency within a finite power budget.

Innovative aspects of the subject matter described in this specification may be embodied in a system, a method, and computer-readable non-transitory storage media for receiving, by a tree direct-memory access (DMA) controller of a machine learning (ML) accelerator, a memory address indicating a location in a memory storing a set of weights associated with a machine-learning model; receiving, by the tree DMA controller, a distribution instruction indicating one or more tensor processor clusters of a plurality of tensor processor clusters of the ML accelerator selected to receive the set of weights for processing, in parallel, different partitioned portions of an input feature; retrieving the set of weights from the location in the memory indicated by the memory address; and sending, via a tree DMA bus, the set of weights in at least one DMA packet addressed to the one or more tensor processor clusters according to the distribution instruction.

In one or more of the disclosed embodiments, each of the plurality of tensor processor clusters includes: a plurality of tensor processor units, each of the plurality of tensor processor units configured to perform a neural network operator on the input feature using the set of weights, each of the plurality of tensor processor units including a local memory; and a cluster-level controller configured to: store the set of weights into the local memory of one or more tensor processor units of the plurality of tensor processor units according to the distribution instruction; generate a token indicating that the input feature was processed; and send the token to the tree DMA controller.

In one or more of the disclosed embodiments, each of the plurality of tensor processor units is communicatively coupled to the tree DMA controller via a plurality of sub-branches of the tree DMA bus.

In one or more of the disclosed embodiments, the at least one DMA packet includes: a destination bitmap indicating the one or more tensor processor clusters selected to receive the set of weights for processing the input feature; and the set of weights for processing the input feature.

In one or more of the disclosed embodiments, the system, method, and computer-readable non-transitory storage media further includes: directing, by a DMA router of the ML accelerator, the at least one DMA packet to the one or more tensor processor clusters according to the distribution instruction.

In one or more of the disclosed embodiments, each of the plurality of tensor processor clusters is communicatively coupled to the tree DMA controller via the tree DMA bus.

In one or more of the disclosed embodiments, the distribution instruction comprises at least one of: a broadcast distribution, wherein the plurality of tensor processor clusters comprises the one or more tensor processor clusters selected to receive the set of weights for processing the input feature; a multicast distribution, wherein a subset of the plurality of tensor processor clusters comprises the one or more tensor processor clusters selected to receive the set of weights for processing the input feature; and a unicast distribution, wherein a singular tensor processor cluster of the plurality of tensor processor clusters comprises the one or more tensor processor clusters selected to receive the set of weights for processing the input feature.

The embodiments disclosed herein are only examples, and the scope of this disclosure is not limited to them. Particular embodiments may include all, some, or none of the components, elements, functions, operations, or steps of the embodiments disclosed above. Embodiments according to the invention are in particular disclosed in the attached claims directed to a method, a storage medium, a system and a computer program product, wherein any element mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the elements thereof are disclosed and can be claimed regardless of the dependencies chosen in the attached claims. The subject-matter which can be claimed comprises not only the combinations of elements as set out in the attached claims but also any other combination of elements in the claims, wherein each element mentioned in the claims can be combined with any other element or combination of other elements in the claims. Furthermore, any of the embodiments and elements thereof described or depicted herein can be claimed in a separate claim and/or in any combination with any embodiment or element described or depicted herein or with any of the elements of the attached claims.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured content (e.g., real-world photographs). The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

## BRIEF DESCRIPTION OF THE DRAWINGS

FIG. 1 illustrates selected elements of an example of a multilayer perception (MLP) neural network.
FIG. 2 illustrates selected elements of a simplified building block of a Deep Neural Network (DNN).
FIG. 3 illustrates selected elements of an example convolutional layer in a convolutional neural network (CNN).
FIG. 4 illustrates an example multi-level convolution operation.
FIG. 5A illustrates an example CNN for a classification-type network.

FIG. 5B illustrates an example CNN for a UNet-type network.

FIG. 6 illustrates selected elements of an example system including a compiler and an ML accelerator.

FIG. 7A illustrates selected elements of an example ML accelerator including multiple tensor processor clusters.

FIG. 7B illustrates selected elements of an example tensor processor cluster.

FIG. 7C illustrates selected elements of an example tensor processor unit.

FIG. 8 illustrates selected elements of an example method for distributing neural network weights using a tree DMA bus.

FIG. 9 illustrates an example computer system.

## DESCRIPTION OF EXAMPLE EMBODIMENTS

Before discussing the present embodiments in detail, it may be beneficial to first provide some background information regarding neural networks and machine learning (ML) models in general. A neural network, or neural net, is a nodal network of interconnected neurons, where each neuron represents a node in the network. Groups of neurons may be arranged in layers, with the outputs of one layer feeding forward to a next layer in a multilayer perception (MLP) arrangement. MLP may be understood to be a feedforward neural network model that maps a set of input data onto a set of output data.

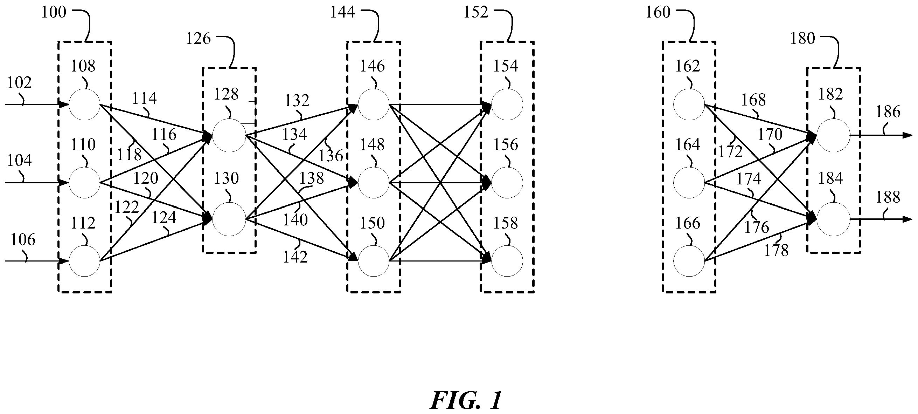

**FIG. 1** illustrates selected elements of an example of a multilayer perception neural network, in accordance with particular embodiments. Its structure may include multiple hidden, e.g., internal, layers that map an input layer 100 that receives a set of inputs or a vector input to an output layer 180 that includes a set of outputs or a vector output. Each layer may include any given number of nodes, which are herein illustratively shown as circles within each layer. For example, input layer 100 includes three nodes, shown as nodes 108 110, and 112, and output layer 180 includes two nodes, shown as 182 and 184. The example neural network illustrated in FIG. 1 includes at least four hidden layers but may include additional hidden layers not shown in FIG. 1. In the illustrated example, the first hidden layer 126 includes two nodes, shown as nodes 128 and 130, while hidden layers 144, 152, and 160 each include three nodes, shown as nodes 146, 148, and 150, nodes 154, 156, and 158, and nodes 162, 164, and 166, respectively. Generally, the deeper the MLP (e.g., the greater the number of hidden layers in the MLP), the greater its capacity to learn. The input layer 100 receives a vector input, illustratively shown as a three-dimensional vector consisting of inputs 102, 104 and 106, and may apply the received vector input to the first hidden layer 126 in the sequence of hidden layers. The output layer 180 receives the output from the last hidden layer in the multilayer model, e.g., 160, processes its inputs, and produces a vector output result, illustratively shown as a two-dimensional vector consisting of outputs 186 and 188.

Typically, each neuron (or node) produces a single output that is fed forward to neurons in the layer immediately following it. However, each neuron in a hidden layer may receive multiple inputs, either from the input layer or from the outputs of neurons in a preceding hidden layer, such as the immediately preceding hidden layer or an earlier hidden layer. In general, each node may apply a function to its inputs to produce an output for that node. Nodes in hidden layers, including layers referred to as learning layers, may apply the same function or a different function to their respective input(s) to produce their respective output(s). Some nodes, however, such as the nodes in the input layer 100 may receive only one input and may be passive, meaning that each node may simply relay the value of its single input to its output(s) thus providing a copy of the input to the output(s).

In the example neural network illustrated in FIG. 1, the outputs of nodes 108, 110, and 112 of input layer 100 feed forward as inputs to hidden layer 126, which includes nodes 128 and 130. The outputs of nodes 128 and 130, in turn, feed forward as inputs to hidden layer 144, which includes nodes 146, 148, and 150, the outputs of nodes 146, 148, and 150 feed forward as inputs to hidden layer 152, which includes nodes 154, 156, and 158, and so on. Finally, the outputs of nodes 162, 164, and 166 of the final hidden layer 160 feed forward as inputs to output layer 180, which includes nodes 182 and 184. Interconnections, or links, between neurons, shown in FIG. 1 as arrows between various nodes, may have respective weights associated with them. For example, the interconnection between node 108 of input layer 100 and node 128 of hidden layer 126 may be associated with a weight 114. In addition, the interconnection between node 108 of input layer 100 and node 130 of hidden layer 126 may be associated with a weight 118, the interconnection between node 110 of input layer 100 and node 128 of hidden layer 126 may be associated with a weight 116, the interconnection between node 110 of input layer 100 and node 130 of hidden layer 126 may be associated with a weight 120, the interconnection between node 112 of input layer 100 and node 128 of hidden layer 126 may be associated with a weight 122, and the interconnection between node 112 of input layer 100 and node 130 of hidden layer 126 may be associated with a weight 124. Similarly, the interconnections between the nodes of hidden layers 126 and 144 may be associated with weights 132, 134, 138, 136, 140, and 142, respectively, and the interconnections between the nodes of hidden layers 160 and output layer 180 may be associated with weights 168, 170, 172, 174, 176, and 178, respectively. Weights associated with the remaining interconnections between nodes in the illustrated neural network are not shown in FIG. 1 for simplicity.

Typically, except for the input layer, a node (neuron) may receive as input the outputs of nodes in its immediately preceding layer. Each node may calculate its output by, e.g., multiplying each of its inputs by each input's corresponding interconnection weight, summing the products of it inputs, adding (or multiplying by) a constant defined by another weight or bias that may be associated with that particular node, and applying a function, such as a non-linear or logarithmic function, to the result. The non-linear function may be referred to as an activation function or transfer function. Multiple activation functions are known in the art, and selection of a specific activation function is not critical to the present discussion. It is noted, however, that operation of the ML model, or behavior of the neural net, is dependent upon weight values, which may be learned so that the neural network provides a desired output for a given input.

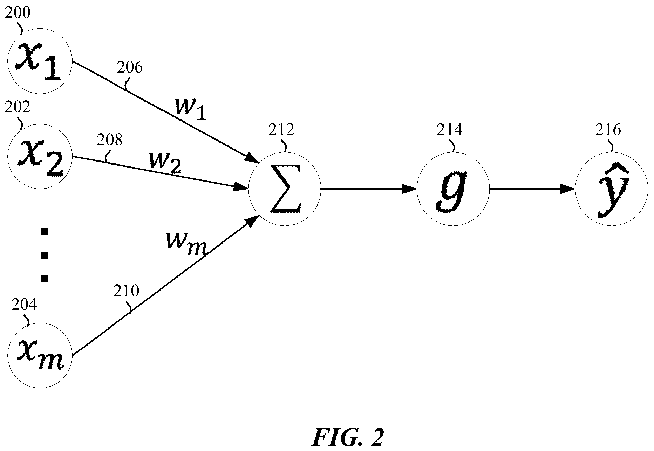

FIG. 2 illustrates, in a simplified view, selected elements of a building block of a Deep Neural Network (DNN). The illustrated building block generates an output vector y for a particular neural network node given inputs $x_1$ (200), $x_2$ (202), and $x_m$ (204), respective interconnection weights $w_1$ (206), $w_2$ (208), and $w_m$ (210), and a non-linear activation function $g$ (214). In the illustrated example, the output vector y may be determined by applying the activation function g (214) to a linear combination of the inputs multiplied by their corresponding weights, as follows:

$$\hat{y} = g\left(\sum_{i=1}^{m} x_i w_i\right)$$

During a training, or learning, stage, the neural network may learn, e.g., may be trained to determine, appropriate weight values to achieve a desired output for a given input. Before the neural network is trained, the weights may be individually assigned an initial value, such as a random, and optionally non-zero, value. Various methods of assigning initial weights are known in the art. The weights are then trained, or optimized, so that for a given training vector input, the neural network produces an output close to a desired, e.g., a predetermined, training vector output. The desired output against which the current output is compared may be referred to as a label for the input data. A training vector input and its corresponding training vector output may be termed an input-output training pair, and a training data set may include multiple input-output training pairs, e.g., tens to millions, or more. In this manner, the weights may be incrementally adjusted in thousands of iterative cycles, such as by a technique termed back-propagation. Several back-propagation techniques are known in the art, including several based on gradient descent, such as batch gradient descent, stochastic gradient descent (SGD), which may include mini-batch gradient descent, distributed synchronous and asynchronous SGD, elastic averaging stochastic gradient descent (EASGD), Hogwild, etc. The different back-propagation techniques may differ in how specific aspects of gradient descent are implemented, but in general, irrespective of the back-propagation technique used, in each cycle of back-propagation, a training input (e.g., vector input) is fed forward through the neural network to determine its actual output (e.g., vector output). An error for each output neuron, or output node, is then calculated based on the actual neuron output and a target or desired training output for that neuron. The process then propagates back through the neural network (in a direction from the output layer back to the input layer), updating the weights based on how much effect each weight has on the overall error so that the output of the neural network moves closer to the desired training output. This cycle may then be repeated until the actual output of the neural network is within an acceptable error range of the desired training output. In machine learning, an epoch typically refers to one complete pass, including back-propagation, if applicable, of the full training dataset to be learned through the machine-learning model. In one epoch, the full training dataset may be submitted to the learning algorithm in a single training iteration, in which case a "batch" of training data is used, or the full training dataset may be submitted in the aggregate after multiple training iterations, each using a subset of the training dataset referred to as a "mini-batch".

Construction of a neural network model, or a machine-learning model in general, may include a learning stage, which may also be referred to as a training stage, and an inference stage, which may also be referred to as an operational, execution, or service stage. In the learning stage, the neural network may be trained for a specific purpose and may be provided with a set of training examples, including training inputs and training outputs provided as input-output training pairs, and optionally including a set of validation examples to test the progress of the training. During this learning process, various weights associated with nodes and node-interconnections (e.g., links) in the neural network may be incrementally adjusted in order to reduce the error between an actual output of the neural network and the desired training output. In this manner, a multi-layer feed-forward neural network, such as that discussed above, may be made capable of approximating any measurable function to any desired degree of accuracy. The result of the learning stage is a machine learning model that has been trained. In the inference stage, an input with unknown outputs may be submitted to the trained machine learning model, e.g., to server or edge device executing the trained ML model, which may apply what has been learned to process the input to produce an output prediction.

For ease of illustration, some aspects of a neural network framework may be disclosed herein within the context of practical example implementations. Due to real-world hardware limitations, neural networks may have practical size limits. For example, some ML models may achieve large sizes of 10 GB, or more, which may require a long time to train and complicate their hardware implementation. Therefore, in particular embodiments, an ML model may be distributed among multiple similar machines, e.g., machines having identical or substantially similar architectures, using various distributive techniques. Furthermore, it is typically desirable that the hardware, e.g., a computing system, used to train an ML model be tailored to the ML model itself and that all training be done on the same computing system. At times, a computing system used to train an ML model may include fast computing devices optimized for computational capacity and remote memory banks, e.g., parameter servers, that may hold interim parameter values, e.g., weight values.

As used herein, the terms "feature" or "features" may refer to input data or output data associated with a convolution operation. In particular embodiments, the output of each layer of a convolutional neural network may be represented by features that no longer resemble the original input in content, size, and/or shape. For example, an input image including 10x10 pixels with RGB channels may be represented by 10x10x3 features. After one round of convolution, the output may be represented by 4x4x2 features that might or might not look like an image. After a second round of convolution in which the 4x4x2 features are processed, the output may be represented by a 1x1 feature that looks nothing like an image, in this example. Features organized in a 3D manner may be referred to herein as a "tensor" having dimensions of height (x), width (y), and a number of channels (z). Note that image data is a very specific type of input that is commonly processed using machine learning and neural networks, but it is by no means the only type of data that can be processed using these techniques and using the ML accelerators described herein. For example, the input data processed by a convolutional neural network may represent a depth map, parameterized user information, a heat map for weather forecasting, etc.

Computing systems and system configurations may be tailored not only for particular types of machine learning models and training algorithms, but also for the types of data the machine learning model is designed to process. For example, machine learning models may receive different types of inputs or features, such as dense inputs, which are typically long vectors, sparse inputs, or a combination of both. Dense feature vectors may be used to represent dense inputs and sparse feature vectors may be used to represent sparse inputs. A dense feature vector may be represented by a mostly-populated vector, e.g., a vector having mostly non-zero entries/cells. A common example of a dense feature vector is image data. As another example, a dense feature vector may include determinable descriptors common to or determinable for most users or circumstances, depending upon the specific application, which may be gleaned from multiple sources. For example, dense features may include personal information associated with a user, information identifying a source of the input information, or other contextual information, such as a location, a time-of-day, etc. It is noted that some dense features may be obtained by user-provided input, while others may be collected from user-related demographic or geographic information, user-device status information, user network activity, or other observable user-related sources. A dense input may be thought of as a collection of multiple, definitely determinable descriptors, where each descriptor may be given a numeric value. Because dense inputs may comprise many descriptor types, e.g., many signal/value sources, that together may characterize, describe, or represent a user or circumstance, a dense input may be a large, dense vector with one or more cells/dimensions/entries in the dense vector being designated to each descriptor type.

A sparse input may reflect more semantic information related to a particular task objective. The sparse input may be defined by a sparse feature vector that identifies selections within a larger list(s) of options, such as lists that may further be divided/grouped into different categories. This may be the case when the list of identifiers that comprises the sparse input identifies individual selections from a larger list of options, such as those provided by the dense vector. As a result, a sparse vector may be characterized by having mostly zero entries, and a few non-zero entries. Consequently, a sparse vector may be represented as a series of indexes pointing to select cell positions in the larger list having non-zero values, along with each index's corresponding non-zero value for that position, with the understanding that all other positions not identified by index have a default zero value. Sparse inputs may not necessarily be directly descriptive of a user or circumstance but may instead provide auxiliary information indirectly related to the user or circumstance. Typically, because of their many zero-entry cells, sparse vectors may not be well-suited for direct input to a neural network.

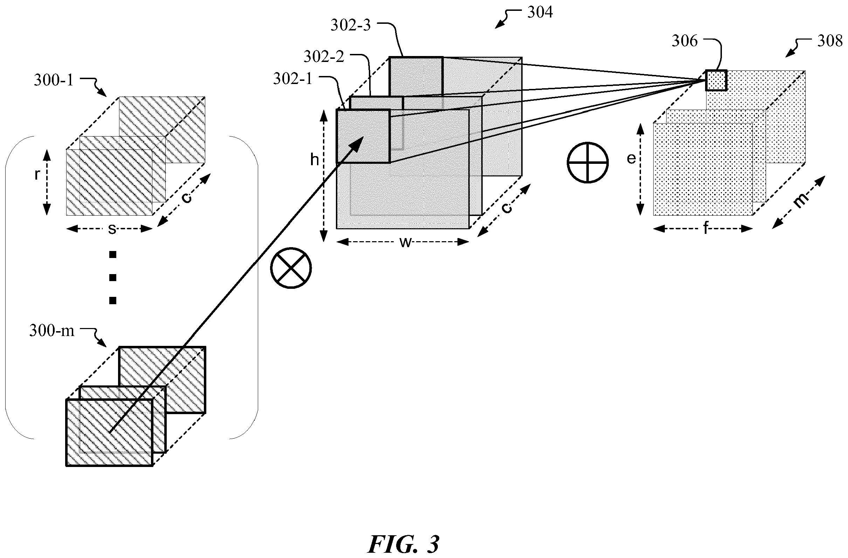

**FIG. 3** illustrates selected elements of an example convolutional layer in a convolutional neural network. In the illustrated example, a three-dimensional (3D) output feature map 308 is generated by performing a series of two-dimensional (2D) convolution operations over a 3D input feature map 304 using a collection of 2D convolution filters 300. More specifically, the input feature map 304 has dimensions h (height) x w (width) x c (where c represents the number of input channels) and the output feature map 308 has dimensions e x $f$ x $m$ (where $m$ represents the number of output channels). In this example, multiple filters 300 are to be applied to the input feature map to generate each element, of each channel, of the output feature map. More specifically, a respective different filter 300 is applied to produce the elements of the output feature map for each given output channel. Therefore, the number of filters 300 (i.e., $m$) matches the number of output channels ($m$).

As shown in FIG. 3, each 3D filter 300 includes a respective 2D kernel of dimensions $r x s$ for each input channel c, and each 2D filter kernel defines a collection of weights, where a respective weight value is associated with each kernel element, as identified by its position within the $r x s$ kernel. For example, each 2D filter kernel may be represented as a 3x3 grid of weights to be convolved with a similarly-sized collection of features within input feature map 304. More specifically, each 2D kernel of filter 300-m is applied in a convolution operation over the elements in a respective channel of input feature map 304. For example, a first 2D kernel of filter 300-m provides the weights that are multiplied by respective values of the elements in an *r x s* sized portion 302-1 of the elements of a first channel of input feature map 304, a second 2D kernel of filter 300-m provides the weights that are multiplied by respective values of the elements in an *r x s* sized portion 302-2 of the elements of a second channel of input feature map 304, and so on, such that a final 2D kernel of filter 300-m provides the weights that are multiplied by respective values of the elements in an *r x s* sized portion 302-3 of the elements of the last channel of input feature map 304. The results of these multiplication operations are then combined to generate a single element 306 of a single channel of output feature map 308, as shown in FIG. 3. This process is repeated as the 2D kernels of filter 300-m are applied to other portions of input feature map 304 to produce the remaining elements of output feature map 308 in the same output channel as element 306, and as the 2D kernels of respective other ones of the filters 300 are applied to input feature map 304 to produce the elements of output feature map 308 in each of the remaining output channels.

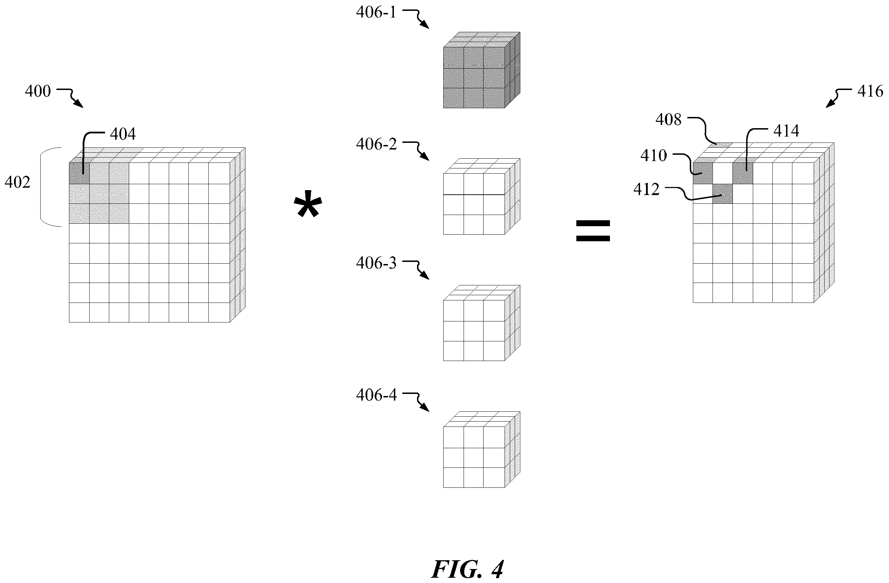

FIG. 4 illustrates an example multi-channel convolution operation, in accordance with particular embodiments. In this example, a multi-channel (3D) output feature map 416 is generated by the application of multiple 3D filters 406 to successive portions of a multi-channel (3D) input feature map 400. In this example, the dimensions of input feature map 416 are *X x Y x Zin,* where *Zin* represents the number of input channels, and the dimensions of output feature map 416 are *X out x Yout x Zout,* where *Zout* represents the number of output channels. Each 3D filter 406 includes a respective 2D kernel of dimensions *KernelX x KernelY* for each output channel *zout* in *Zout,* where *kx* and *ky* represent the x/y position of a particular element of the 2D kernel corresponding to a particular output channel. In this example, the value of each element of output feature map 416 is computed as follows:

$$[x][y][zout] +$$
$$= activations[x + kx][y + ky][zin] * weights[kx][ky][zin][zout]$$

In the illustrated example, there is one 3D filter 406 for each channel (*zout*) in *Zout.* More specifically, the illustrated multi-channel convolution uses four 3D filters 406 to generate elements for each x/y position in each of four output channels, respectively, while sweeping the appropriate 2D kernels across and down the elements of input feature map 400 in each of the input channels. For example, the value of element 410 of output feature map 416 is determined by applying highlighted 3D filter 406-1 to the highlighted portion 402 of input feature map 400, i.e., 27 activations including 9 activations in respective x/y positions in each of 3 input channels *zin*. Similarly, the value of element 408 of output feature map 416 is determined by applying 3D filter 406-4 to the highlighted portion 402 of input feature map 400.

Traversing input feature map 400 in the *x* dimension involves sweeping the highlighted portion 402 across the input feature map such that element 404 moves one position to the right to identify a next set of activations for each successive iteration in the *x* dimension. For example, the value of element 414 of output feature map 416 is determined by applying 3D filter 406-1 to the highlighted portion 402 of input feature map 400 after the highlighted portion has been moved from the initial position in which it is shown in FIG. 4 to a location two positions to the right. Traversing input feature map 400 in the y dimension involves sweeping the highlighted portion 402 across the input feature map such that element 404 moves one position down to identify a next set of activations for each successive iteration in the y dimension. For example, the value of element 412 of output feature map 416 is determined by applying 3D filter 406-1 to the highlighted portion 402 of input feature map 400 after the highlighted portion has been moved from the initial position in which it is shown in FIG. 4 to a location one position down and one position to the right.

Performing the multi-channel convolution illustrated in FIG. 4 involves performing a series of 2D convolutions, as follows:

$$for\ zout\ in\ Zout$$
$$for\ x\ in\ Xout$$
$$for\ y\ in\ Yout$$
$$for\ kx\ in\ KernelX$$
$$for\ ky\ in\ KernelY$$
$$for\ zin\ in\ Zin$$
$$output[x][y][zout] +=$$
$$activations[x + kx][y + ky][zin]\qquad *$$
$$weights[kx][ky][zin][zout]$$

In particular embodiments, the generation of scalar addresses identifying the input and output elements for each 2D convolution is performed by the compiler when generating the tensor instructions that represent the multi-channel convolution. In particular embodiments, the generation of scalar addresses for each of the corresponding input tensors (activation addresses), weight tensors (weight addresses), and output tensor (output address) may be performed in hardware, such as within the ML accelerators described herein, in accordance with the following:

for the activation addresses:

$$for\ x\ in\ Xout$$
$$for\ y\ in\ Yout$$
$$for\ kx\ in\ KernelX$$
$$for\ ky\ in\ KernelY$$
$$for\ zin\ in\ Zin$$
$$activations[x + kx][y + ky][zin],$$

for the weight addresses:

$$for\ zout\ in\ Zout$$
$$for\ kx\ in\ KernelX$$
$$for\ ky\ in\ Kernel\ Y$$
$$for\ zin\ in\ Zin$$
$$weights[kx][ky][zin][zout],$$

and for the output address:

$$for\ zout\ in\ Zout$$

$$for\ x\ in\ Xout$$

$$for\ y\ in\ Yout$$

$$for\ zin\ in\ Zin$$

$$outputs[x][y][zout].$$

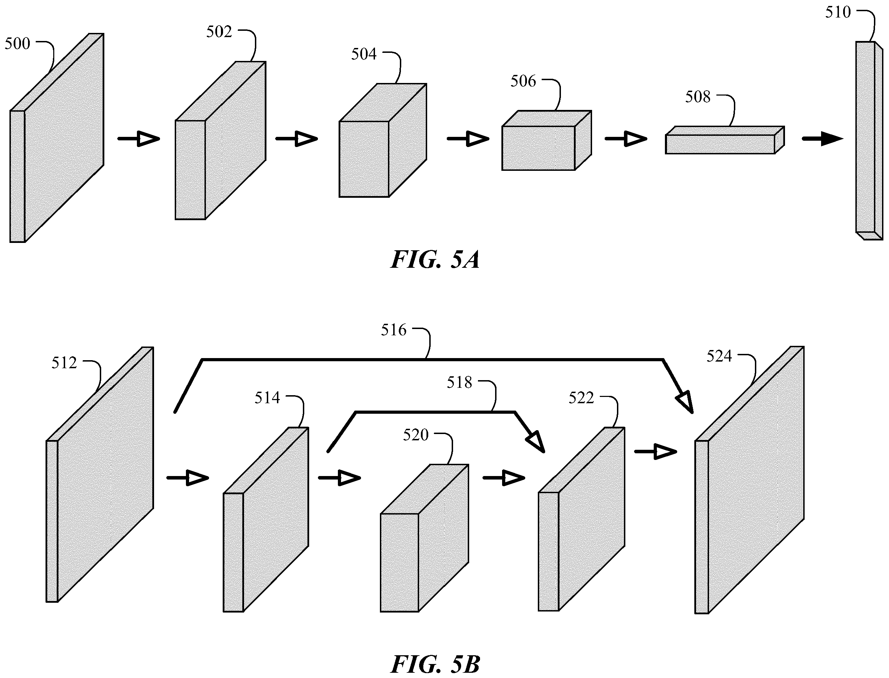

**FIG. 5A** illustrates an example convolutional neural network in which an output feature map 510 is generated based on an input feature map 500 in a classification-type neural network. This type of neural network may typically involve a small or medium resolution input, a single vector output, and a relatively large number of output channels. In the illustrated example, intermediate feature maps of different sizes and shapes, shown as feature maps 502, 504, 506 and 508, are generated by performing successive convolution operations on each such intermediate feature map, in turn, and the output feature map 510 is generated by a fully connected (FC) layer operating on the final intermediate feature map 508. As shown in FIG. 5A, it may be typical for the overall size, and corresponding memory requirements, to be reduced for each successive intermediate feature map in a classification-type neural network.

**FIG. 5B** illustrates an example CNN in which an output feature map 524 is generated based on an input feature map 512 in a UNet-type neural network. This type of neural network may involve high resolution input and/or output feature maps and a relatively small number of input and/or output channels. This type of neural network may also involve long skip connections such that a particular intermediate feature map may be dependent not only on the immediately preceding intermediate feature map but also on another previous intermediate feature map. Such skip connections are shown by arrows 516 and 518 in FIG. 5B. In the illustrated example, intermediate feature maps of different sizes and shapes, shown as feature maps 514, 520, and 522, are generated using a series of convolution operations prior to the generation of the output feature map 524. In this example, intermediate feature map 514 is generated based on input feature map 512, intermediate feature map 520 is generated based on intermediate feature map 514, intermediate feature map 522 is generated based on both intermediate feature map 520 and on intermediate feature map 514, and output feature map 524 is generated based on both intermediate feature map 522 and input feature map 512. In particular embodiments, such as in AR/VR applications, the input and output feature maps may have similar sizes and shapes, while the sizes and shapes of the intermediate feature maps may vary widely. For example, in some cases, a particular intermediate feature map may be shorter, narrower, and/or shallower than the preceding feature map(s) from which it was generated, while in other cases, a particular feature map may be taller, wider, and/or deeper than the preceding feature map(s) from which it was generated.

As noted above, in a convolutional neural network, the convolutional layers typically account for the vast majority of the computations performed and the data movement within the CNN and/or between the CNN and other elements of an ML model, making them a performance bottleneck. Therefore, modern CNN accelerators focus on using high compute parallelism along with an optimized data orchestration throughout the memory hierarchy to speed up the processing of convolutional layers. Conventionally, individual tensor processor units within a machine learning accelerator may asynchronously perform convolution operations (e.g., multiplication, accumulation, pooling, and the like) on image data or another type of input feature map, or a portion thereof that has been spatially partitioned. However, effectively harnessing the compute power of these accelerators may require the design of a particular mapping scheme that dictates when (i.e., at which processing cycle) and where (i.e., at which compute data path among hundreds to thousands of them) each operation (i.e., each multiply-and-accumulate, or MAC) is performed. The design of such a mapping scheme may, in turn, have an impact on the hardware architecture design, as the hardware would need to be able to deliver data at the right time and in the right format to the right compute data path so that it can be operated on in the right cycle.

The ML accelerators described herein employ a multi-level control architecture designed to optimally exploit parallelism provided by tensor processor units in the ML accelerator. These machine learning accelerators may include one or more tensor processor clusters, each of which may include multiple tensor processor units. Each tensor processor may be a single-instruction-multiple-data (SIMD) machine that includes a compute array capable of performing vector operations to implement data parallelism or model parallelism at the tensor processor or tensor processor cluster level. Each tensor processor cluster may include a shared controller that controls and synchronizes the operations of the tensor processor units within the cluster so that they perform a common series of operations in parallel and in lockstep. As described in more detail herein, the multi-level control architecture may support more flexibility in parallelism for computations of neural network layers than is possible using existing ML acceleration schemes, while lowering hardware costs due to the physical circuit area and/or power consumed by various tensor instructions. The multi-level apparatus may be used to implement any of a variety of neural network solutions to machine learning problems including, but not limited to, object identification, feature classification, or content-driven image processing. The multi-level apparatus may be particularly well suited for implementation within edge devices that have strict power consumption constraints and that run inference exercises using previously trained models in real time, such as in AR/VR headsets.

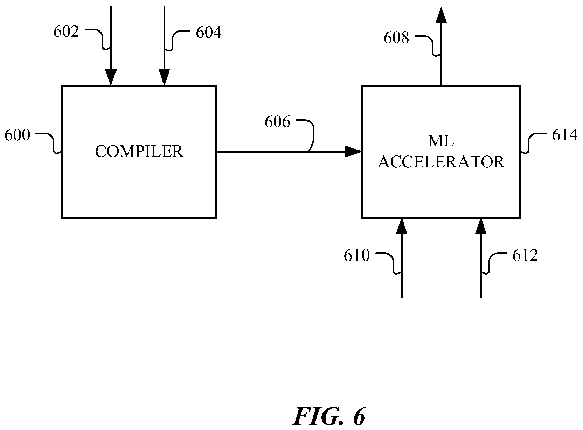

**FIG. 6** illustrates selected elements of an example system including a compiler 600 and an ML accelerator 614. In the illustrated example, compiler 600 generates machine language instructions, shown as tensor instructions 606, based on inputs including programming language instructions 602 and configuration information 604 indicating the configuration of a neural network that is to perform the tensor instructions 606. In this example system, ML accelerator 614 receives the tensor instructions 606 and generates, for input features 610 and applicable weights 612, output features 608. For example, compiler 600 may, in accordance with an instruction set architecture (ISA) that is used to facilitate machine learning processing for a specific hardware architecture, map a single ML operation (such as a convolution operation) to multiple machine language instructions, any or all of which may be multi-dimensional (tensor) instructions. In particular embodiments, a full ML layer may be represented using one or more instructions in each of three classes of hardware instructions: compute instructions, non-linear unit (NLU) instructions, and direct-memory access (DMA) instructions.

In particular embodiments, the compiler 600 may analyze a workload to be performed by the neural network and determine respective coarse-grained tensor instructions to be sent to each tensor processor cluster of ML accelerator 614 using a SIMD and/or singleprogram-multiple-data (SPMD) approach to distribute the workload. The compiler 600 may distribute the workload based on the architecture of the neural network, the number of tensor processor clusters, the number and processing capacity of the tensor processor units in each tensor processor cluster, the input and output feature dimensions, the number and types of convolutions and other operations to be performed at different layers of the neural network, and/or the relationships between the output features produced at each layer and the input features required at the next layer. The workload distribution decisions may maximize the reuse of locally available feature sets and weights once they are loaded into the memories of particular tensor processor units, reduce the amount of data movement required between and within tensor processor clusters, and optimize resource utilization in ML accelerator 614.

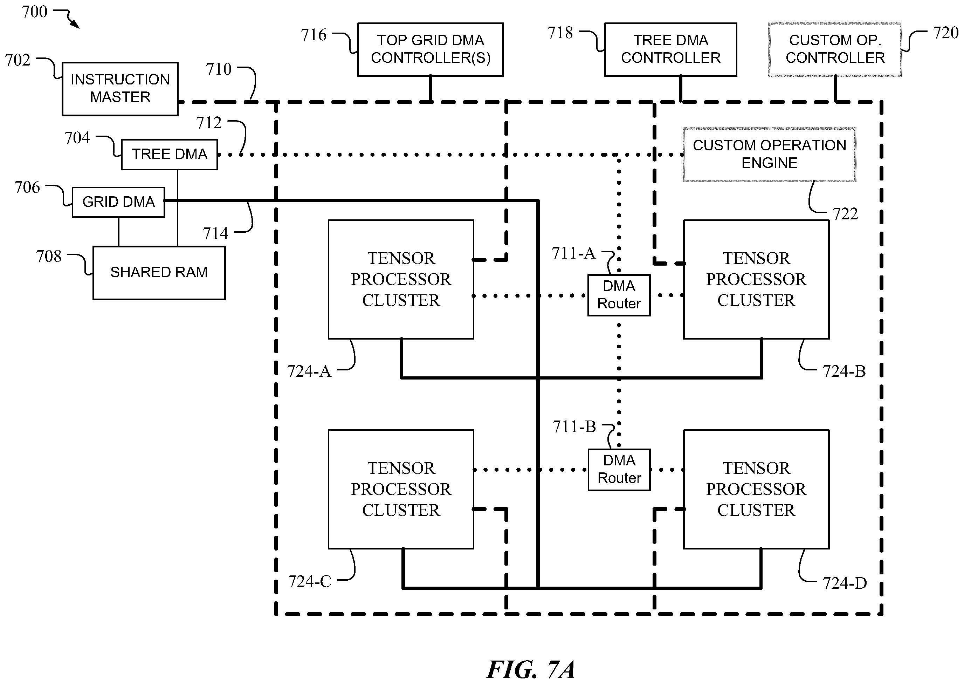

**FIGS. 7A** through 7C illustrate selected elements of an example ML accelerator, such as an ML accelerator similar to ML accelerator 614 illustrated in FIG. 6, at different levels of the multi-level accelerator architecture. For example, FIG. 7A illustrates that an example ML accelerator 700 may include four tensor processor clusters 724 and may include, or be communicably coupled to, one or more top grid DMA controllers 716, a tree DMA controller 718, and/or an optional custom operation engine 722 and a corresponding optional custom operation controller 720. ML accelerator 700 may include, or be communicably coupled to, an instruction master 702, which may be communicably coupled to each of the four tensor processor clusters 724, the top grid DMA controllers 716, and the tree DMA controller 718 over an instruction bus 710. ML accelerator 700 may also include a tree DMA 704 and a grid DMA 706, each of which is communicably coupled to a shared RAM 708. Tree DMA 704 may be communicably coupled to each of the four tensor processor clusters 724 (via DMA routers 711) and the optional custom operation engine 722 over tree DMA bus 712. Grid DMA 706 may be communicably coupled to each of the four tensor processor clusters 724 over grid DMA bus 714. In at least some embodiments, ML accelerator 700 may also include a synchronization bus (not shown in FIG. 7A) communicably coupled to the four tensor processor clusters 724, the top grid DMA controllers 716, the tree DMA controller 718, the optional custom operation engine 722 and corresponding optional custom operation controller 720, the instruction master 702, the tree DMA 704, the grid DMA 706, and/or the shared RAM 708, or any suitable subset thereof.

In one embodiment, tree DMA controller 718 may comprise a system, device, or apparatus generally operable to distribute neural network weights to tensor processor clusters 724 for processing input features. For example, tree DMA controller 718 may distribute weights 612 (illustrated in FIG. 6) received by ML accelerator 614 to tensor processor clusters 724 such that each tensor processor cluster 724 may process input features 610 in parallel. Tree DMA controller 718 may distribute weights to tensor processor clusters 724 according to instructions received from the compiler. For example, tree DMA controller 718 may distribute weights 612 to tensor processor clusters 724 according to tensor instructions 606 (illustrated in FIG. 6) received by ML accelerator 614 from compiler 600. Each tensor instruction received by tree DMA controller 718 from the compiler may include one or more memory addresses indicating locations in memory where neural network weights are stored and distribution instructions indicating which tensor processor clusters 724 have been selected to receive the neural network weights. In the example illustrated in FIG. 7A, tree DMA controller 718 may receive tensor instructions from the compiler over instruction bus 710 (via instruction master 702).

In one embodiment, tensor instructions received by tree DMA controller 718 from the compiler may include one or more memory addresses indicating locations in memory where neural network weights are stored. For example, tree DMA controller 718 may receive tensor instructions 606 from compiler 600 (illustrated in FIG. 6) that include a memory address indicating a location in shared RAM 708 where a set of weights are stored. Upon receiving tensor instructions from the compiler, neural network weights may be retrieved from the locations in memory indicated by the one or more memory addresses. In one embodiment, tree DMA controller 718 may provide tree DMA 704 with the memory address included in the tensor instruction received from the compiler and instruct tree DMA 704 to retrieve a set of weights from shared RAM 708 at the location indicated by the memory address. In another embodiment, tree DMA controller 718 may retrieve a set of weights from shared RAM 708 at the location indicated by the memory address. Once the set of weights has been retrieved from memory, tree DMA 704 may distribute the set of weights to tensor processor clusters 724 via tree DMA bus 712.

In one embodiment, tensor instructions received by tree DMA controller 718 from the compiler may include one or more distribution instructions indicating which tensor processor clusters 724 have been assigned to receive a set of weights. In particular, a distribution instruction may indicate to tree DMA controller 718 which tensor processor clusters 724 have been selected by the compiler to process an input feature using the set of weights stored in shared RAM 708. In one embodiment, distribution instructions may indicate a broadcast distribution, multicast distribution, and/or a unicast distribution. A broadcast distribution instruction indicates to tree DMA controller 718 that the compiler has selected each tensor processor cluster 724 in ML accelerator 700 to receive a set of weights for processing an input feature in parallel. For example, a broadcast distribution instruction from the compiler may prompt tree DMA controller 718 to instruct tree DMA 704 to broadcast a set of weights stored in shared RAM 708 to each tensor processor cluster 724-A through D. A multicast distribution instruction indicates that the compiler has selected a subset tensor processor clusters 724 in ML accelerator 700 to receive a set of weights for processing an input feature in parallel. For example, in response to receiving a multicast distribution instruction from the compiler, tree DMA controller 718 may instruct tree DMA 704 to multicast a set of weights stored in shared RAM 708 to tensor processor clusters 724-A through C, thereby excluding tensor processor cluster 724-D from receiving the set of weights. A unicast distribution instruction indicates to tree DMA controller 718 that the compiler has selected a singular tensor processor cluster 724 to receive a set of weights for processing an input feature. For example, tree DMA controller 718 may instruct tree DMA 704 to unicast a set of weights stored in shared RAM 708 to tensor processor cluster 724-D only, thereby excluding tensor processor clusters 724-A through C from receiving the set of weights. By allowing each tensor processor cluster 724, a subset of tensor processor clusters 724, or a singular tensor processor cluster 724 to receive a set of weights, distribution instructions afford an increased granularity in processing workflow.

In one embodiment, the compiler may base distribution instructions, in part, on partitioning schemes associated with input features at compile time. For instance, input features may be spatially-partitioned or batch-partitioned to facilitate an optimized workflow for processing the input features. In some embodiments, this optimized workflow may require tensor processor clusters 724 of ML accelerator 700 to process different partitioned portions of input features in parallel with respect to one another. For example, each tensor processor cluster 724A through D may process respective batch-partitioned input features, or portions of the same spatially-partitioned input feature, in lockstep with one another to minimize latency and maximize throughput. The compiler may select a partitioning scheme (e.g., batch-partitioned, spatially-partitioned, and the like) that best exploits parallelism across multiple tensor processor clusters 724. For example, an input feature comprising a large digital image may be spatially-partitioned into four smaller portions (i.e., quartered) such that each tensor processor cluster 724A through D is assigned to process a quarter of the overall digital image. Here, because each tensor processor cluster 724 receives a portion of the same digital image, distribution instructions from the compiler may instruct tree DMA controller 718 to distribute a set of weights in a broadcast distribution for processing respective portions of the digital image in parallel. In another example, an input feature comprising an RGB image (comprised of red, green, and blue neural network channels) may be batch-partitioned such that tensor processor clusters 724-A, B, and C receive the red, green, and blue neural network channels, respectively. In this example, distribution instructions from the compiler may instruct tree DMA controller 718 to unicast three respective sets of weights (i.e., corresponding to red, green, and blue neural network channels) to tensor processor clusters 724-A, B, and C for processing the RGB image in parallel.

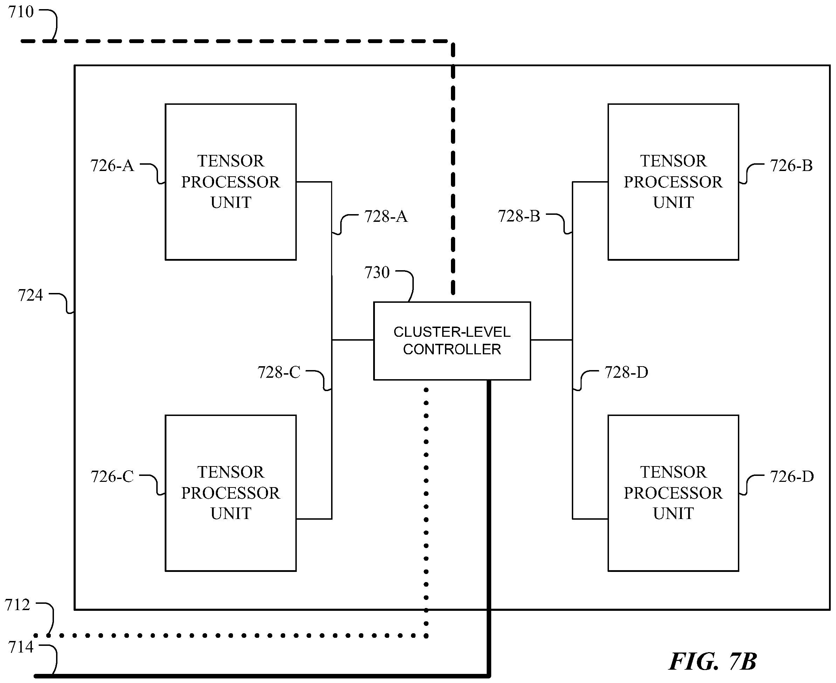

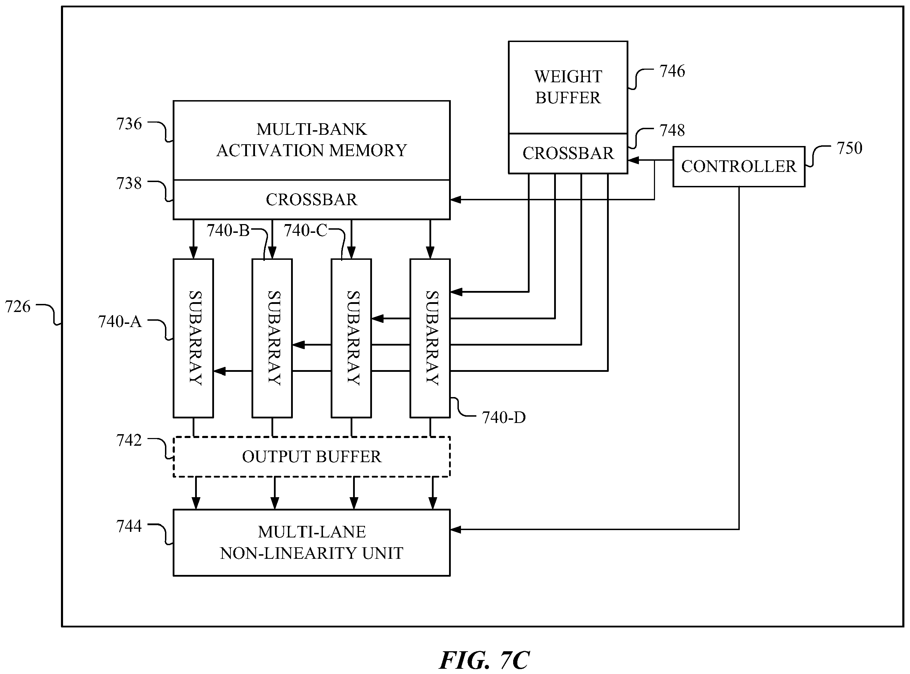

In one embodiment, tree DMA controller 718 may distribute a set of weights to tensor processor clusters 724 in one or more DMA packets. In particular, tree DMA controller 718 may instruct tree DMA 704 to generate a DMA packet that includes the set of weights to be sent to tensor processor clusters 724 via tree DMA bus 712. In one embodiment, each DMA packet may include a destination bitmap, a payload address, and a payload. The destination bitmap may be or include a header of the DMA packet in which each tensor processor cluster 724 is represented by a bit, or bits, within the destination bitmap. In one embodiment, the destination bitmap may be comprised of four bits, where each bit is used to represent a respective tensor processor cluster (e.g., tensor processor clusters 724-A through D) selected to process an input feature using the set of weights. In another embodiment, the destination bitmap may be comprised of 16 bits, where each bit is used to represent a respective tensor processor unit 726 (shown in FIG. 7B) selected to process an input feature using the set of weights. The payload address may specify an address within a local memory of a tensor processor cluster 724 in which the set of weights is to be stored. For example, the payload address of a DMA packet may point to an address within a weight buffer 746 (shown in FIG. 7C) of a tensor processor unit 726 within a tensor processor cluster 724 selected to process the input feature using the set of weights. The payload may be or include the set of weights to be used for processing the input feature. In this way, DMA packets support the granularity required for executing distribution instructions, allowing payloads to be broadcast, multicast, and/or unicast across tensor processor clusters 724. In other embodiments, DMA packets may include additional, fewer, or any number of elements suitable for distributing neural network weights to tensor processor clusters 724.

In the example illustrated in FIG. 7A, each tensor processor cluster 724 is communicably coupled to tree DMA bus 712. Tree DMA bus 712 may be of a tree network topology, allowing tree DMA controller 718 to distribute neural network weights to tensor processor clusters 724 directly, thereby minimizing latency and overall power consumption of ML accelerator 614. That is, each tensor processor cluster 724 in ML accelerator 614 may be communicably coupled to shared RAM 708 via tree DMA bus 712 according to a tree network topology that allows ML accelerator 614 to consume less power (e.g., power required for neural network weight distribution) than the power required for broadcast, or multicast, distribution using other network topologies (e.g., star topology, ring topology, mesh topology, and the like). As described above, tree DMA controller 718 may instruct tree DMA 704 to distribute DMA packets in a broadcast distribution, in which each tensor processor cluster 724 receives the same payload (i.e., set of weights) for processing an input feature. Because tree DMA bus 712 communicably couples each tensor processor cluster 724 to shared RAM 708 according to a tree network topology, tensor processor clusters 724 may receive a DMA packet in a broadcast, or multicast, distribution at approximately the same instance. This allows each tensor processor cluster 724 receiving the DMA packet to begin processing the input feature in lockstep with one another. Therefore, the tree-like architecture of tree DMA bus 712 illustrated in FIG. 7A promotes increased parallelism for processing input features over other network topologies (e.g., star topology, ring topology, mesh topology, and the like) while having the granularity to access individual tensor processor units 726 (illustrated in FIG. 7B) within each tensor processor cluster 724.

In one embodiment, each DMA router 711 may comprise a system, device, or apparatus generally operable to direct DMA packets from shared RAM 708 to one or more tensor processor clusters 724 via tree DMA bus 712. In the example illustrated in FIG. 7A, DMA router 711-A may receive a DMA packet, or DMA packets, from tree DMA 704. As described above, each DMA packet may include a destination bitmap that specifies one or more tensor processor clusters 724 selected by the compiler to receive the DMA packet according to a distribution instruction executed by tree DMA controller 718. Based on the destination bitmap of the DMA packet, DMA router 711-A may send the DMA packet to tensor processor cluster 724-A, tensor processor cluster 724-B, and/or DMA router 711-B. If the DMA packet arrives at DMA router 711-B, the DMA packet may be sent to tensor processor cluster 724-C and/or tensor processor cluster 724-D. That is, DMA router 711-B may direct the DMA packet to tensor processor cluster 724-C and/or tensor processor cluster 724-D based on the destination bitmap. In one embodiment, each DMA router 711 in ML accelerator may include one ingress port and a configurable number of egress ports. In other embodiments, each DMA router 711 may have a configurable number of ingress and egress ports. It is noted that although the example ML accelerator 700 illustrated in FIG. 7A includes two DMA routers 711-A and B, other embodiments of ML accelerator 700 may include additional, fewer, and/or any number of DMA routers 711 suitable for directing DMA packets to tensor processor clusters 724.

In one embodiment, each tensor processor cluster 724 may comprise a system, device, or apparatus generally operable to process input features. In particular, each tensor processor cluster 724 may be configured to perform various neural network operators (e.g., convolution, bias-add, normalization, residual addition, and the like) on an input feature received from shared RAM 708. In the example illustrated in FIG. 7A, each tensor processor cluster 724 in ML accelerator 700 may be communicably coupled to tree DMA 704, and thereby tree DMA controller 718, via tree DMA bus 712. As described above, the tree-like architecture of tree DMA bus 712 allows tensor processor clusters 724 of ML accelerator 700 to process input features in parallel, thereby optimizing workflow. That is, the tree network topology of tree DMA bus 712 allows each tensor processor cluster 724 to receive neural network weights directly from shared RAM 708 in a broadcast, or multicast, distribution at approximately the same instance, thereby minimizing latency and overall power consumption of ML accelerator 614. Tensor processor clusters 724 are described in greater detail with respect to FIG. 7B.

FIG. 7B illustrates selected elements of an example tensor processor cluster 724, such as one of the four tensor processor clusters 724 of ML accelerator 700 illustrated in FIG. 7A. In this example, tensor processor cluster 724 includes four tensor processor units 726, a shared cluster-level controller 730, and four tree DMA bus sub-branches 728 used to communicably couple tensor processor units 726 to tree DMA bus 712 (via cluster-level controller 730).

In one embodiment, cluster-level controller 730 may comprise a system, device, or apparatus generally operable to interpret coarse-grained tensor instructions received from a compiler, such as compiler 600 illustrated in FIG. 6, and translate it into a series of fine-grained tensor instructions that may be sent to tensor processor units 726 in tensor processor cluster 724 tasked with performing the common series of operations. Each of these fine-grained tensor instructions may include neural network operators (e.g., convolution, bias-add, normalization, pooling, and the like) to be performed by hardware compute arrays within each tensor processor unit 726 or may represent a non-linear instruction to be applied to an intermediate output of the hardware compute arrays to produce an element of an output feature. In addition, cluster-level controller 730 may include synchronizers that synchronize the operations of the tensor processor units 726 within tensor processor cluster 724 so that they may perform the common series of operations in parallel and in lockstep. In particular, cluster-level controller 730 may use the synchronizers to generate a token indicating that tensor processor units 726 have completed the common series of operations and that the input feature was processed. In one embodiment, cluster-level controller 730 may send the token to tree DMA controller 718 such that tree DMA controller 718 may instruct tree DMA 704 to retrieve an additional set of weights from shared RAM 708 to distribute to tensor processor units 726 for further processing in lockstep. Cluster-level controller 730 may ensure that the appropriate subsets of the input feature and the set of weights to be applied for each operation have been loaded into the local memory of each tensor processor unit 726 tasked with performing the common series of operations. In one embodiment, this may include generating an address pattern for the weights, generating an address pattern for the input activations, and generating an address pattern for the outputs of the common series of operations. In another embodiment, cluster-level controller 730 may ensure that the set of weights has been loaded into the local memory of each tensor processor unit 726 based on the payload address included in a DMA packet received by the cluster-level controller 730 via tree DMA bus 712.

In the example illustrated in FIG. 7B, cluster-level controller 730 receives tensor instructions (e.g., coarse-grained tensor instructions) over instruction bus 710. Each coarse-grained tensor instruction sent to a tensor processor cluster 724 may encode information usable by the tensor processor cluster 724 to perform a multi-cycle operation corresponding to a part of a single neural network layer. In one example, using a SPMD approach, compiler 600 (illustrated in FIG. 6) may distribute a workload such that different tasks are assigned to different tensor processor clusters 724 with some or all of the tensor processor clusters 724 operating on the same input feature. In another example, using a SIMD approach, compiler 600 may distribute the workload such that the same tasks are assigned to multiple tensor processor clusters 724 and such that each of those multiple tensor processor clusters 724 operates on different data, such as on a different subset of an input feature for the neural network. Using this approach, the tensor processor clusters 724 may operate in parallel and may typically, but not necessarily, operate in lockstep with one another.

Convolutional neural networks used in AR/VR applications must typically support input and output feature maps with a wide variety of shapes and sizes, especially along the channel dimension. With existing ASIC accelerators, supporting this diversity can result in decreased hardware utilization and a corresponding loss of performance and energy efficiency. The tensor processor units described in this application address this problem using flexible hardware resources and flexible computation-to-hardware mapping. For example, FIG. 7C illustrates selected elements of an example tensor processor unit 726, such as one of the four tensor processor units 726 of tensor processor cluster 724 illustrated in FIG. 7B. In particular embodiments, tensor processor unit 726 is implemented with a flexible architecture in which computation components are organized such that the tensor processor unit 726 can support a variety of convolutional layer shapes with high resource utilization and high reuse of locally available data. The tensor processor unit 726 may be a single-instruction-multiple-data (SIMD) machine that includes a compute array capable of performing vector operations that collectively implement higher-level tensor instructions using data parallelism or model parallelism in a neural network. In the example illustrated in FIG. 7C, tensor processor unit 726 includes a multi-bank activation memory 736, a first crossbar 738, four compute subarrays 740, an optional output buffer 742, a multi-lane non-linearity unit 744, a weight buffer 746, e.g., a register file storing weights, a second crossbar 748, and a local controller 750. In particular embodiments, tensor processor unit 726 may, during operation, be dynamically configured to perform convolution operations of different sizes and shapes by controlling the size and shape of the input feature map data and weights supplied to each of the subarrays 740 and MAC computation units thereof using the flexible crossbars 738 and 748 and by controlling the reduction and/or combination of the outputs of each of the subarrays 740 and MAC computation units thereof to generate an output feature map of a desired size and shape. In particular embodiments, tensor processor unit 726 may also be configured to perform group convolution operations in which not all output elements depend on the same input elements or weights.

In the illustrated example, multi-bank activation memory 736 includes local memory elements that store the input feature map elements to be provided to various ones of the subarrays 740. The first crossbar 738 is a first flexible many-to-many crossbar that reads input feature map elements (e.g., pixel values) from multi-bank activation memory 736 and provides them to the appropriate subarrays 740 in each cycle. In the illustrated example, weight buffer 746, which may be implemented as a register file, includes local memory elements that store the filter weights to be provided to various ones of the subarrays 740. The second crossbar 748 is another flexible crossbar that loads filter weights from weight buffer 746 and provides them to the appropriate subarrays 740 in each cycle.

In particular embodiments, each of the four compute subarrays 740 includes an array of multiply-and-accumulate (MAC) computation units of a given size that operate in parallel to apply the weights defined for a given 2D kernel of a given 3D convolution filter to portions of an input feature map and produce portions of an output feature map. The output feature map may have a different shape than the input feature map. A local controller 750 within tensor processor unit 726 may, e.g., in conjunction with a shared cluster-level controller, such as shared cluster-level controller 730 illustrated in FIG. 7B, control the operation of the crossbars 738 and 748 and the flexible reduction module or multi-lane non-linearity unit 744, in accordance with the coarse-grained tensor instructions received from compiler 600 illustrated in FIG. 6 and/or fine-grained instructions received from the shared cluster-level controller 730.

In particular embodiments, the optional output buffer 742 stores intermediate outputs from one or more subarrays 740 such that partial results may be accumulated prior to passing them through a reduction module, thus reducing the scope and/or complexity of the reduction operation. In particular embodiment, the multi-lane non-linearity unit 744 is a flexible reduction module configurable to take an intermediate computation output from the subarrays 740 and perform a reduction (i.e., addition) of subarray outputs to produce an output for tensor processor unit 726 as a whole, where appropriate.

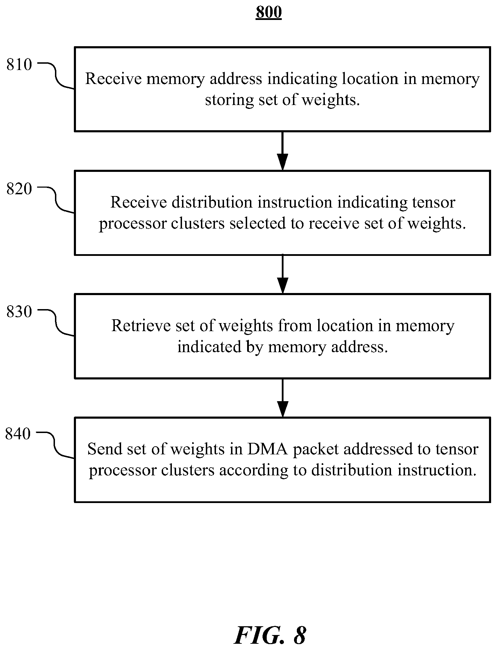

**FIG. 8** illustrates selected elements of an example method for distributing neural network weights using a tree DMA bus. The method may begin at step 810, where a tree direct-memory access (DMA) controller of a machine learning (ML) accelerator receives a memory address indicating a location in memory storing a set of weights associated with a machine learning model. The tree DMA controller may receive the memory address from a compiler. At step 820, the tree DMA controller may receive a distribution instruction indicating one or more tensor processor clusters of the ML accelerator selected to receive the set of weights for processing. At step 830, the tree DMA controller may retrieve the set of weights from the location in memory indicated by the memory address and at step 840, the tree DMA controller may send the set of weights in a DMA packet addressed to the one or more tensor processor clusters according to the distribution instruction. The DMA packet may be sent to the one or more tensor processor clusters via the tree DMA bus of the ML accelerator and the tensor processor clusters may process different partitioned portions of an input feature in parallel using the set of weights.

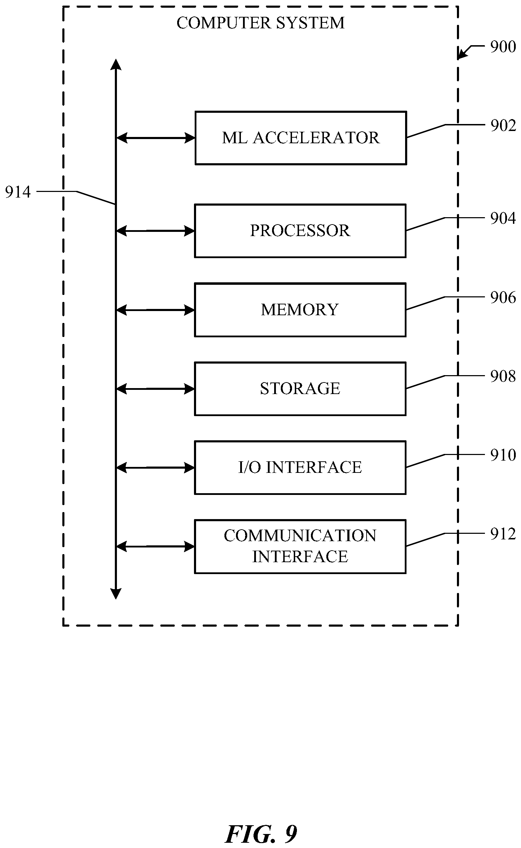

**FIG. 9** illustrates an example computer system 900. In particular embodiments, one or more computer systems 900 perform one or more steps of one or more methods described or illustrated herein. In particular embodiments, one or more computer systems 900 provide functionality described or illustrated herein. In particular embodiments, software running on one or more computer systems 900 performs one or more steps of one or more methods described or illustrated herein or provides functionality described or illustrated herein. Particular embodiments include one or more portions of one or more computer systems 900. Herein, reference to a computer system may encompass a computing device, and vice versa, where appropriate. Moreover, reference to a computer system may encompass one or more computer systems, where appropriate.

This disclosure contemplates any suitable number of computer systems 900. This disclosure contemplates computer system 900 taking any suitable physical form. As example and not by way of limitation, computer system 900 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an AR/VR reality device, or a combination of two or more of these. Where appropriate, computer system 900 may include one or more computer systems 900; be unitary or distributed; span multiple locations; span multiple machines; span multiple data centers; or reside in a cloud, which may include one or more cloud components in one or more networks. Where appropriate, one or more computer systems 900 may perform without substantial spatial or temporal limitation one or more steps of one or more methods described or illustrated herein. As an example, and not by way of limitation, one or more computer systems 900 may perform in real time or in batch mode one or more steps of one or more methods described or illustrated herein. One or more computer systems 900 may perform at different times or at different locations one or more steps of one or more methods described or illustrated herein, where appropriate.

In particular embodiments, computer system 900 includes a processor 904, memory 906, storage 908, an input/output (I/O) interface 910, a communication interface 912, a bus 914, and an ML accelerator 902. Although this disclosure describes and illustrates a particular computer system having a particular number of particular components in a particular arrangement, this disclosure contemplates any suitable computer system having any suitable number of any suitable components in any suitable arrangement.

In particular embodiments, processor 904 includes hardware for executing instructions, such as those making up a computer program. As an example, and not by way of limitation, to execute instructions, processor 904 may retrieve (or fetch) the instructions from an internal register, an internal cache, memory 906, or storage 908; decode and execute them; and then write one or more results to an internal register, an internal cache, memory 906, or storage 908. In particular embodiments, processor 904 may include one or more internal caches for data, instructions, or addresses. This disclosure contemplates processor 904 including any suitable number of any suitable internal caches, where appropriate. As an example, and not by way of limitation, processor 904 may include one or more instruction caches, one or more data caches, and one or more translation lookaside buffers (TLBs). Instructions in the instruction caches may be copies of instructions in memory 906 or storage 908, and the instruction caches may speed up retrieval of those instructions by processor 904. Data in the data caches may be copies of data in memory 906 or storage 908 for instructions executing at processor 904 to operate on; the results of previous instructions executed at processor 904 for access by subsequent instructions executing at processor 904 or for writing to memory 906 or storage 908; or other suitable data. The data caches may speed up read or write operations by processor 904. The TLBs may speed up virtual-address translation for processor 904. In particular embodiments, processor 904 may include one or more internal registers for data, instructions, or addresses. This disclosure contemplates processor 904 including any suitable number of any suitable internal registers, where appropriate. Where appropriate, processor 904 may include one or more arithmetic logic units (ALUs); be a multi-core processor; or include one or more processors 904. Although this disclosure describes and illustrates a particular processor, this disclosure contemplates any suitable processor.

In particular embodiments, ML accelerator 902 may be similar to ML accelerator 614 illustrated in FIG. 6, or ML accelerator 700 illustrated in FIG. 7A. As such, particular instructions of computer programs for machine learning applications that use a convolutional neural network may be translated into tensor instructions for execution by various computational elements of ML accelerator 902, as described herein. In particular embodiments, ML accelerator 902 may be implemented using hardware and/or software elements in any suitable combination. As described herein, ML accelerator 902 may include multiple tensor processor clusters and underlying tensor processor units, each of which may include local memory for storing input features, weights for 2D kernels of various multi-dimensional filters, and/or output features of various convolution operations. In particular embodiments, these local memories may be loaded from storage 908, memory 906, or from another source (such as, for example, another computer system 900). The use of ML accelerator 902 to execute the tensor instructions may improve the overall performance and resource utilization of computer system 900 for those applications when compared to executing them using processor 904 or using an existing ML accelerator.

In particular embodiments, memory 906 includes main memory for storing instructions for processor 904 to execute or data for processor 904 to operate on. As an example, and not by way of limitation, computer system 900 may load instructions from storage 908 or another source (such as, for example, another computer system 900) to memory 906. Processor 904 may then load the instructions from memory 906 to an internal register or internal cache. To execute the instructions, processor 904 may retrieve the instructions from the internal register or internal cache and decode them. During or after execution of the instructions, processor 904 may write one or more results (which may be intermediate or final results) to the internal register or internal cache. Processor 904 may then write one or more of those results to memory 906. In particular embodiments, processor 904 executes only instructions in one or more internal registers or internal caches or in memory 906 (as opposed to storage 908 or elsewhere) and operates only on data in one or more internal registers or internal caches or in memory 906 (as opposed to storage 908 or elsewhere). One or more memory buses (which may each include an address bus and a data bus) may couple processor 904 to memory 906. Bus 914 may include one or more memory buses, as described below. In particular embodiments, one or more memory management units (MMUs) reside between processor 904 and memory 906 and facilitate accesses to memory 906 requested by processor 904. In particular embodiments, memory 906 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 906 may include one or more memories 906, where appropriate. Although this disclosure describes and illustrates particular memory, this disclosure contemplates any suitable memory.

In particular embodiments, storage 908 includes mass storage for data or instructions. As an example, and not by way of limitation, storage 908 may include a hard disk drive (HDD), a floppy disk drive, flash memory, an optical disc, a magneto-optical disc, magnetic tape, or a Universal Serial Bus (USB) drive or a combination of two or more of these. Storage 908 may include removable or non-removable (or fixed) media, where appropriate. Storage 908 may be internal or external to computer system 900, where appropriate. In particular embodiments, storage 908 is non-volatile, solid-state memory. In particular embodiments, storage 908 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 908 taking any suitable physical form. Storage 908 may include one or more storage control units facilitating communication between processor 904 and storage 908, where appropriate. Where appropriate, storage 908 may include one or more storages 908. Although this disclosure describes and illustrates particular storage, this disclosure contemplates any suitable storage.

In particular embodiments, I/O interface 910 includes hardware, software, or both, providing one or more interfaces for communication between computer system 900 and one or more I/O devices. Computer system 900 may include one or more of these I/O devices, where appropriate. One or more of these I/O devices may enable communication between a person and computer system 900. As an example, and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 910 for them. Where appropriate, I/O interface 910 may include one or more device or software drivers enabling processor 904 to drive one or more of these I/O devices. I/O interface 910 may include one or more I/O interfaces 910, where appropriate. Although this disclosure describes and illustrates a particular I/O interface, this disclosure contemplates any suitable I/O interface.

In particular embodiments, communication interface 912 includes hardware, software, or both providing one or more interfaces for communication (such as, for example, packet-based communication) between computer system 900 and one or more other computer systems 900 or one or more networks. As an example, and not by way of limitation, communication interface 912 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 912 for it. As an example, and not by way of limitation, computer system 900 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 900 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 900 may include any suitable communication interface 912 for any of these networks, where appropriate. Communication interface 912 may include one or more communication interfaces 912, where appropriate. Although this disclosure describes and illustrates a particular communication interface, this disclosure contemplates any suitable communication interface.

In particular embodiments, bus 914 includes hardware, software, or both coupling components of computer system 900 to each other. As an example, and not by way of limitation, bus 914 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 914 may include one or more buses 914, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

**Claims**

1. A method comprising:

receiving, by a tree direct-memory access (DMA) controller of a machine learning (ML) accelerator, a memory address indicating a location in a memory storing a set of weights associated with a machine-learning model;
receiving, by the tree DMA controller, a distribution instruction indicating one or more tensor processor clusters of a plurality of tensor processor clusters of the ML accelerator selected to receive the set of weights for processing, in parallel, different partitioned portions of an input feature;
retrieving the set of weights from the location in the memory indicated by the memory address; and
sending, via a tree DMA bus, the set of weights in at least one DMA packet addressed to the one or more tensor processor clusters according to the distribution instruction.

**2.** The method of claim 1, wherein each of the plurality of tensor processor clusters includes:

a plurality of tensor processor units, each of the plurality of tensor processor units configured to perform a neural network operator on the input feature using the set of weights, each of the plurality of tensor processor units including a local memory; and
a cluster-level controller configured to:

store the set of weights into the local memory of one or more tensor processor units of the plurality of tensor processor units according to the distribution instruction;
generate a token indicating that the input feature was processed; and
send the token to the tree DMA controller,
and, optionally, wherein each of the plurality of tensor processor units is communicatively coupled to the tree DMA controller via a plurality of sub-branches of the tree DMA bus.

**3.** The method of claim 1, wherein the at least one DMA packet includes:

a destination bitmap indicating the one or more tensor processor clusters selected to receive the set of weights for processing the input feature; and
the set of weights for processing the input feature.

**4.** The method of claim 1, further comprising:

directing, by a DMA router of the ML accelerator, the at least one DMA packet to the one or more tensor processor clusters according to the distribution instruction, and / or
wherein each of the plurality of tensor processor clusters is communicatively coupled to the tree DMA controller via the tree DMA bus.

**5.** The method of claim 1, wherein the distribution instruction comprises at least one of:

a broadcast distribution, wherein the plurality of tensor processor clusters comprises the one or more tensor processor clusters selected to receive the set of weights for processing the input feature;
a multicast distribution, wherein a subset of the plurality of tensor processor clusters comprises the one or more tensor processor clusters selected to receive the set of weights for processing the input feature; and
a unicast distribution, wherein a singular tensor processor cluster of the plurality of tensor processor clusters comprises the one or more tensor processor clusters selected to receive the set of weights for processing the input feature.

**6.** One or more computer-readable non-transitory storage media embodying software that is operable when executed to perform the method of any of claims 1 to 5 or to:

receive, by a tree direct-memory access (DMA) controller of a machine learning (ML) accelerator, a memory address indicating a location in a memory storing a set of weights associated with a machine-learning model;
receive, by the tree DMA controller, a distribution instruction indicating one or more tensor processor clusters of a plurality of tensor processor clusters of the ML accelerator selected to receive the set of weights for processing, in parallel, different partitioned portions of an input feature;
retrieve the set of weights from the location in the memory indicated by the memory address; and
send, via a tree DMA bus, the set of weights in at least one DMA packet addressed to the one or more tensor processor clusters according to the distribution instruction.

**7.** The media of claim 6, wherein each of the plurality of tensor processor clusters includes:

a plurality of tensor processor units, each of the plurality of tensor processor units configured to perform a neural network operator on the input feature using the set of weights, each of the plurality of tensor processor units including a local memory; and
a cluster-level controller configured to:

store the set of weights into the local memory of one or more tensor processor units of the plurality of tensor processor units according to the distribution instruction;

generate a token indicating that the input feature was processed; and
send the token to the tree DMA controller ,
and, optionally, wherein each of the plurality of tensor processor units is communicatively coupled to the tree DMA controller via a plurality of sub-branches of the tree DMA bus.

8. The media of claim 6, wherein the at least one DMA packet includes:

a destination bitmap indicating the one or more tensor processor clusters selected to receive the set of weights for processing the input feature; and
the set of weights for processing the input feature.

9. The media of claim 6, wherein the media further includes:
a DMA router of the ML accelerator configured to direct the at least one DMA packet to the one or more tensor processor clusters according to the distribution instruction.

10. The media of claim 6, wherein each of the plurality of tensor processor clusters is communicatively coupled to the tree DMA controller via the tree DMA bus.

11. The media of claim 6, wherein the distribution instruction comprises at least one of:

a broadcast distribution, wherein the plurality of tensor processor clusters comprises the one or more tensor processor clusters selected to receive the set of weights for processing the input feature;
a multicast distribution, wherein a subset of the plurality of tensor processor clusters comprises the one or more tensor processor clusters selected to receive the set of weights for processing the input feature; and
a unicast distribution, wherein a singular tensor processor cluster of the plurality of tensor processor clusters comprises the one or more tensor processor clusters selected to receive the set of weights for processing the input feature.

12. A system comprising:

a compiler;
a tree DMA bus;
a plurality of tensor processor clusters; and
a tree direct-memory access (DMA) controller communicably coupled to each of the plurality of tensor processor clusters via the tree DMA bus, the tree DMA controller configured to perform the method of any of claims 1 to 5 or to:

receive a memory address from the compiler, the memory address indicating a location in a memory storing a set of weights associated with a machine-learning model;
receive a distribution instruction indicating one or more tensor processor clusters of the plurality of tensor processor clusters selected to receive the set of weights for processing, in parallel, different partitioned portions of an input feature;
retrieve the set of weights from the location in the memory indicated by the memory address; and
send, via the tree DMA bus, the set of weights in at least one DMA packet addressed to the one or more tensor processor clusters according to the distribution instruction.

13. The system of claim 12, wherein each of the plurality of tensor processor clusters includes:

a plurality of tensor processor units, each of the plurality of tensor processor units configured to perform a neural network operator on the input feature using the set of weights, each of the plurality of tensor processor units including a local memory; and
a cluster-level controller configured to:

store the set of weights into the local memory of one or more tensor processor units of the plurality of tensor processor units according to the distribution instruction;
generate a token indicating that the input feature was processed; and
send the token to the tree DMA controller,
and, optionally, wherein each of the plurality of tensor processor units is communicatively coupled to the tree DMA controller via a plurality of sub-branches of the tree DMA bus.

14. The system of claim 12, wherein the at least one DMA packet includes:

a destination bitmap indicating the one or more tensor processor clusters selected to receive the set of weights for processing the input feature; and
the set of weights for processing the input feature, and/or
wherein the system further includes:
a DMA router configured to direct the at least one DMA packet to the one or more tensor processor clusters according to the distribution instruction.

15. The system of claim 12, wherein the distribution instruction comprises at least one of:

a broadcast distribution, wherein the plurality of tensor processor clusters comprises the one or more tensor processor clusters selected to receive the set of weights for processing the input feature;
a multicast distribution, wherein a subset of the plurality of tensor processor clusters comprises the one or more tensor processor clusters selected to receive the set of weights for processing the input feature; and
a unicast distribution, wherein a singular tensor processor cluster of the plurality of tensor processor clusters comprises the one or more tensor processor clusters selected to receive the set of weights for processing the input feature.

*FIG. 1*

EP 3 975 056 A1

FIG. 2

21

*FIG. 3*

**FIG. 4**

**FIG. 5A**

**FIG. 5B**

EP 3 975 056 A1

FIG. 6

**FIG. 7A**

*FIG. 7B*

**FIG. 7C**

**800**

810 — Receive memory address indicating location in memory storing set of weights.

820 — Receive distribution instruction indicating tensor processor clusters selected to receive set of weights.

830 — Retrieve set of weights from location in memory indicated by memory address.

840 — Send set of weights in DMA packet addressed to tensor processor clusters according to distribution instruction.

*FIG. 8*

COMPUTER SYSTEM

900

ML ACCELERATOR — 902

914

PROCESSOR — 904

MEMORY — 906

STORAGE — 908

I/O INTERFACE — 910

COMMUNICATION INTERFACE — 912

*FIG. 9*

Europäisches
Patentamt

European
Patent Office

Office européen
des brevets

**EUROPEAN SEARCH REPORT**

Application Number

EP 21 17 7937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 709 224 A1 (SHANGHAI CAMBRICON INF TECH CO LTD [CN]) 16 September 2020 (2020-09-16) * paragraph [0841] - paragraph [0856]; figure 89 * * paragraph [2372] * ----- | 1-15 | INV. G06N3/04 G06N3/063 G06N3/08 |

TECHNICAL FIELDS SEARCHED (IPC)

G06N

The present search report has been drawn up for all claims

| Place of search | Date of completion of the search | Examiner |
|---|---|---|
| The Hague | 8 November 2021 | Falco, Gabriele |

EPO FORM 1503 03.82 (P04C01)

## ANNEX TO THE EUROPEAN SEARCH REPORT
## ON EUROPEAN PATENT APPLICATION NO.

EP 21 17 7937

This annex lists the patent family members relating to the patent documents cited in  the above-mentioned European search report.
The members are as contained in the European Patent Office EDP file on
The European Patent Office is in no way liable for these particulars which are merely given for the purpose of information.

08-11-2021

| Patent document cited in search report | | Publication date | Patent family member(s) | | Publication date |
|---|---|---|---|---|---|
| EP 3709224 | A1 | 16-09-2020 | CN | 107832804 A | 23-03-2018 |
| | | | CN | 107832843 A | 23-03-2018 |
| | | | CN | 107832844 A | 23-03-2018 |
| | | | CN | 107832845 A | 23-03-2018 |
| | | | CN | 107833176 A | 23-03-2018 |
| | | | CN | 107844832 A | 27-03-2018 |
| | | | CN | 107895191 A | 10-04-2018 |
| | | | CN | 107992486 A | 04-05-2018 |
| | | | CN | 107993206 A | 04-05-2018 |
| | | | CN | 108874444 A | 23-11-2018 |
| | | | CN | 108874445 A | 23-11-2018 |
| | | | CN | 108875926 A | 23-11-2018 |
| | | | CN | 108898554 A | 27-11-2018 |
| | | | CN | 108958801 A | 07-12-2018 |
| | | | CN | 108984211 A | 11-12-2018 |
| | | | CN | 108986022 A | 11-12-2018 |
| | | | CN | 109003132 A | 14-12-2018 |
| | | | CN | 109003603 A | 14-12-2018 |
| | | | CN | 109034382 A | 18-12-2018 |
| | | | CN | 109034383 A | 18-12-2018 |
| | | | CN | 109062539 A | 21-12-2018 |
| | | | CN | 109062606 A | 21-12-2018 |
| | | | CN | 109062607 A | 21-12-2018 |
| | | | CN | 109063830 A | 21-12-2018 |
| | | | CN | 109063831 A | 21-12-2018 |
| | | | CN | 109064384 A | 21-12-2018 |
| | | | CN | 109086074 A | 25-12-2018 |
| | | | CN | 109086075 A | 25-12-2018 |
| | | | CN | 109117183 A | 01-01-2019 |
| | | | CN | 109117184 A | 01-01-2019 |
| | | | CN | 109117947 A | 01-01-2019 |
| | | | CN | 109117948 A | 01-01-2019 |
| | | | CN | 109522254 A | 26-03-2019 |
| | | | CN | 109523020 A | 26-03-2019 |
| | | | CN | 109542514 A | 29-03-2019 |
| | | | CN | 109542515 A | 29-03-2019 |
| | | | CN | 109725936 A | 07-05-2019 |
| | | | CN | 109726806 A | 07-05-2019 |
| | | | CN | 109997154 A | 09-07-2019 |
| | | | CN | 110084361 A | 02-08-2019 |
| | | | CN | 110610236 A | 24-12-2019 |
| | | | CN | 110689125 A | 14-01-2020 |
| | | | CN | 110689126 A | 14-01-2020 |
| | | | CN | 111160548 A | 15-05-2020 |
| | | | CN | 111160549 A | 15-05-2020 |
| | | | CN | 111178521 A | 19-05-2020 |

For more details about this annex : see Official Journal of the European Patent Office, No. 12/82

EPO FORM P0459

page 1 of 2

**ANNEX TO THE EUROPEAN SEARCH REPORT
ON EUROPEAN PATENT APPLICATION NO.**                    EP 21 17 7937

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2021

| Patent document cited in search report | Publication date | Patent family member(s) | | Publication date |
|---|---|---|---|---|
| | | CN | 111291880 A | 16-06-2020 |
| | | CN | 111310910 A | 19-06-2020 |
| | | EP | 3709224 A1 | 16-09-2020 |
| | | US | 2021150685 A1 | 20-05-2021 |
| | | US | 2021157992 A1 | 27-05-2021 |
| | | US | 2021158484 A1 | 27-05-2021 |
| | | US | 2021182077 A1 | 17-06-2021 |
| | | US | 2021192245 A1 | 24-06-2021 |
| | | WO | 2019085655 A1 | 09-05-2019 |

EPO FORM P0459

For more details about this annex : see Official Journal of the European Patent Office, No. 12/82

page 2 of 2